# EUROPÄISCHE PATENTSCHRIFT

(11) **EP 2 841 190 B1**
(45) Veröffentlichungstag und Bekanntmachung des Hinweises auf die Patenterteilung: **03.08.2016**
(21) Anmeldenummer: 13723420.9
(22) Anmeldetag: 19.04.2013
(51) Int. Cl.: B01F 7/04, B01F 7/00

(54) **VORRICHTUNG ZUM TRANSPORT VON VISKOSEN MASSEN UND PASTEN**
DEVICE FOR TRANSPORTING VISCOUS COMPOUNDS AND PASTES
DISPOSITIF POUR LE TRANSPORT DE MATIÈRES ET DE PÂTES VISQUEUSES

(30) Priorität: 24.04.2012 DE 102012103565
(43) Veröffentlichungstag der Anmeldung: 04.03.2015
(73) Patentinhaber: LIST Holding AG, 4422 Arisdorf (CH)
(72) Erfinder: WITTE, Daniel, 79639 Grenzach-Wyhlen (DE)
(74) Vertreter: Patentanwälte und Rechtsanwalt Weiß, Arat & Partner mbB
(86) Internationale Anmeldenummer: PCT/EP2013/058143
(87) Internationale Veröffentlichungsnummer: WO 2013/160196

(56) Entgegenhaltungen:
- EP-A1- 0 274 668
- EP-A1- 1 714 694
- WO-A2-2010/034446
- CH-A- 506 322
- DE-A1- 1 557 167
- DE-A1- 2 123 956
- JP-U- H01 148 731
- US-A- 4 039 024

## Beschreibung

Die Erfindung betrifft einen Mischkneter nach dem Oberbegriff von Anspruch 1.

### Stand der Technik

In der Verfahrenstechnik sind gerührte Behälter zur Reaktionsführung oder für thermische Prozesse seit langem üblich. Wird der Rührbehälter kontinuierlich betrieben, ist es wünschenswert den Füllgrad im Rührbehälter einstellen zu können, da der Kessel sonst über- oder unterfüllen kann oder das Edukt oder Produkt im Rührbehälter unterschiedlichen Verweilzeit ausgesetzt wäre. Die Einstellung des Füllgrades erfolgt gravimetrisch entweder über ein Wehr, über welches das Produkt überläuft, oder mittels einer Pumplösung mit Füllstandssonde.

Bei viskosen Massen oder Pasten funktioniert die gravimetrische Füllstandkontrolle nicht, da der Rührer so ausgestaltet sein muss, dass er das Produkt oder Edukt zwangsfördert. Die Kräfte, die bei der Zwangsförderung entstehen, sind dabei grösser als die Gravitationskräfte und damit bestimmend, wie hoch der Füllgrad im Rührbehälter ist. Ein übliches Beispiel ist eine Förderschnecke, wie z.B. in der DE 15 57 167 A1 gezeigt. Bei dieser wird das Produkt gegen die Behälterwand gedrückt, wo es reibt. Die Schneckenflanke schiebt nun das durch die Wandreibung behinderte Produkt in Richtung der Förderrichtung der Schnecke. Der Füllgrad einer solchen Konstruktion ist durch die nominale Fördermenge der Schnecke und deren Drehzahl bestimmt. Die nominale Fördermenge der Schnecke lässt sich für gegebene Schneckengeometrien berechnen. Man kann also den Füllgrad in der Schnecke durch Variation ihrer Drehzahl ändern.

Ein Nachteil der Förderschnecke ist, dass die Förderleistung mit dem Durchmesser der Schnecke quadratisch zunimmt. Soll ein grosser Rührbehälter gebaut werden, heisst das, dass die Schneckensteigung sehr klein sein muss, um einen hohen Füllgrad einzustellen. Damit wird die Welle sehr voluminös und schwer, vor allem, wenn sie selbstreinigend sein soll, wie es bei einigen Zweiwellenschnecken der Fall ist. Alternativ muss die Drehzahl stark zurückgenommen werden, was die Rührleistung des Rührbehälters stark einschränkt.
Soll der Füllgrad im Schneckenraum zusätzlich erhöht werden, kann der Rückfluss von der Rückseite her gestaut werden. Die Schnecke läuft dann vor dem Staupunkt voll, so dass es zu einem Rückfluss in der Schnecke kommt. Der Rückfluss und die durch den erhöhten Füllgrad erhöhte Förderleistung gleichen sich exakt aus. Die Schnecke baut dann gemäss dem Druckgefälle des Rückstroms in Förderrichtung Druck auf, welcher der Stauung entgegenwirkt. Es wird somit ein erhöhter Füllgrad in der Schnecke erreicht, der allerdings inhomogen ist, da im Einzugsbereich ein niedriger Füllgrad gegeben, aber vor der Stauung über eine bestimmte Länge die Schnecke zu 100 % gefüllt ist. Auch wird durch diese Methode sehr viel Energie in das Produkt dissipiert.

Die Schnecke kann nun so gebaut werden, dass sie effizienter Druck aufbaut, indem die Scherspalte verringert werden. Dann wird weniger mechanische Verlustleistung erzeugt. Damit wird der Bereich der 100 % gefüllten Schnecke aber kürzer und das Ziel einer effizienten Füllgradregelung ist wieder nicht erfüllt.

Um die Situation der Füllgradregelung zu verbessern, wurden grossvolumige Kneter (im folgenden Kneter genannt) entwickelt. Derartige Vorrichtungen werden auch als Mischkneter bezeichnet. Sie dienen sehr vielfältige Zwecken. Als erstes ist das Eindampfen mit Lösungsmittelrückgewinnung zu erwähnen, welches chargenweise oder kontinuierlich und oft auch unter Vakuum erfolgt. Hierdurch werden beispielsweise Destillationsrückstände und insbesondere Toluoldiisocyanate behandelt, aber auch Produktionsrückstände mit toxischen oder hochsiedenden Lösungsmitteln aus der Chemie und Pharmaproduktion, Waschlösungen und Lack-Schlämme, Polymerlösungen, Elastomerlösungen aus der Lösemittelpolymerisation, Klebstoffe und Dichtmassen.

Mit den Apparaten wird ferner eine kontinuierliche oder chargenweise Kontakttrocknung, Wasser- und/oder lösemittelfeuchter Produkte, oftmals ebenfalls unter Vakuum, durchgeführt. Die Anwendung ist vor allem gedacht für Pigmente, Farbstoffe, Feinchemikalien, Additive, wie Salze, Oxyde, Hydroxyde, Antioxydantien, temperaturempfindliche Pharma- und Vitaminprodukte, Wirkstoffe, Polymere, synthetische Kautschuke, Polymersuspensionen, Latex, Hydrogele, Wachse, Pestizide und Rückstände aus der chemischen oder pharmazeutischen Produktion, wie Salze, Katalysatoren, Schlacken, Ablaugen gedacht. Anwendung finden diese Verfahren auch in der Lebensmittelproduktion, beispielsweise bei der Herstellung und/oder Behandlung von Blockmilch, Zuckeraustauschstoffen, Stärkederivaten, Alginaten, zur Behandlung von Industrieschlämmen, Ölschlämmen, Bioschlämmen, Papierschlämmen, Lackschlämmen und allgemein zur Behandlung von klebrigen, krustenden zähpastösen Produkte, Abfallprodukten und Zellulosederivaten.

In Mischknetern kann ein Entgasen und/oder Devolatilisieren stattfinden. Angewendet wird dies auf Polymerschmelzen, nach Kondensation von Polyester oder Polyamidschmelzen, auf Spinnlösungen für synthetische Fasern und auf Polymer- oder Elastomergranulate bzw. -pulver im festen Zustand.

In einem Mischkneter kann eine Polykondensationsreaktion, meist kontinuierlich und meist in der Schmelze, stattfinden und wird vor allem verwendet bei der Behandlung von Polyamiden, Polyester, Polyacetaten, Polyimide, Thermoplaste, Elastomere, Silikone, Harnstoffharze, Phenolharze, Detergentien und Düngemittel.

Stattfinden kann auch eine Polymerisationsreaktion, ebenfalls meist kontinuierlich. Dies wird angewendet auf Polyakrylate, Hydrogele, Polyole, thermoplastische Polymere, Elastomere, syndiotaktisches Polysterol und Polyacrylamide.

Ganz allgemein können im Mischkneter Reaktionen fest, flüssig und mehrphasige Reaktionen stattfinden. Dies gilt vor allem für Backreaktionen, bei der Behandlung von Flusssäure, Stearaten, Zyanaten, Polyphosphaten, Cyanursäuren, Zellulosederivaten, -ester, -äther, Polyacetalharzen, Sulfanilsäuren, Cu-Phthalocyaninen, Stärkederivaten, Ammoniumpolyphosphaten, Sulfonaten, Pestiziden und Düngemittel.

Des weiteren können Reaktionen fest-/gasförmig (z.B. Karboxylierung) oder flüssig-/gasförmig stattfinden. Angewendet wird dies bei der Behandlung von Acetaten, Aciden, Kolbe-Schmitt-Reaktionen, z.B. BON, Na-Salicylaten, Parahydroxibenzoaten und Pharmaprodukten.

Reaktionen flüssig/flüssig erfolgen bei Neutralisationsreaktionen und Umesterungsreaktionen.

Ein Lösen und/oder Entgasen in derartigen Mischknetern findet bei Spinnlösungen für synthetische Fasern, Polyamiden, Polyester und Zellulosen statt.

Ein sogenanntes Flushen findet bei der Behandlung bzw. Herstellung von Pigmenten statt.

Eine Solid-State- Nachkondensation findet bei der Herstellung bzw. Behandlung von Polyester und Polyamiden statt, ein kontinuierliches Anmeischen z.B. bei der Behandlung von Fasern, z.B. Zellulosefasern mit Lösungsmitteln, eine Kristallisation aus der Schmelze oder aus Lösungen bei der Behandlung von Salzen, Feinchemikalien, Polyolen, Alkoholaten, ein Compoundieren, Mischen (kontinuierlich und/oder chargenweise) bei Polymeren-Mischungen, Silikonmassen, Dichtmassen, Flugasche, ein Coagulieren (insbesondere kontinuierlich) bei der Behandlung von Polymersuspensionen.

In einem Mischkneter können auch multifunktionale Prozesse kombiniert werden, beispielsweise Erhitzen, Trocknen, Schmelzen, Kristallisieren, Mischen, Entgasen, Reagieren - dies alles kontinuierlich oder chargenweise. Hergestellt bzw. behandelt werden dadurch Polymere, Elastomere, anorganische Produkte, Rückstände, Pharmaprodukte, Lebensmittelprodukte, Druckfarben.

In Mischknetern kann auch eine Vakuumsublimation/ Desublimation stattfinden, wodurch chemische Vorprodukte, z.B. Anthrachinon, Metallchloride, metallorganische Verbindungen usw. gereinigt werden. Ferner können pharmazeutische Zwischenprodukte hergestellt werden.

Eine kontinuierliche Trägergas-Desublimation findet z.B. bei organischen Zwischenprodukten, z.B. Antrachinon und Feinchemikalien statt.

Im wesentlichen werden einwellige und zweiwellige Mischkneter unterschieden. Ein einwelliger Mischkneter wird beispielsweise in der EP 91 105 497.1 (EP 0 451 747 A1) beschrieben. Mehrwellige Misch- und Knetmaschine werden in der CH-A 506 322, der EP 0 517 068 B, der DE 199 40 521 A1 oder der DE 101 60 535 beschrieben ist. Dort befinden sich auf einer Welle radiale Scheibenelemente und zwischen den Scheiben angeordnete axial ausgerichtete Knetbarren. Zwischen diese Scheiben greifen von der anderen Welle rahmenartig geformte Misch- und Knetelemente ein. Diese Misch- und Knetelemente reinigen die Scheiben und Knetbarren der ersten Welle. Die Knetbarren auf beiden Wellen reinigen wiederum die Gehäuseinnenwand.

Die Wellen drehen meist in horizontaler Anordnung in einem Gehäuse, wobei auf der zylindrischen Kernwelle Scheibensegmente angeordnet sind. Die Form der Scheibensegmente ist so gestaltet, dass sie so unterbrochen sind, dass Segmentleeräume entstehen, wodurch das Produkt in Wellenrichtung fliessen kann. Auf den Scheibensegmenten sind Förderelemente befestigt, die Barren oder auch Transportbarren genannt werden.

Bei einwelligen Knetern werden in dem Gehäuse statische Einbauten befestigt, so dass Scheibensegmente, Barren und statische Einbauten durch die kinematische Bewegung der Welle sich regelmässig begegnen. Bei mehrwelligen Knetern finden die Begegnungen zwischen den Scheibenelementen und Barren der Gegenwelle statt. Die Scheibensegmente können auf der Welle versetzt sein und mögen eine definierte Form haben, die der kinematischen Bewegung der Gegenwelle folgt. Es gibt eine Vielzahl von geometrischen Möglichkeiten, solche Kneter zu bauen.

Die Konstruktion der Kneter wurde historisch von Schneckenmaschinen abgeleitet. Man hat daher die Flankenkante der Barren, ähnlich wie bei Schneckenapparaten, fluchtend angeordnet. Damit der Kneter in eine gewünschte Richtung fördert, werden die Barren auf den Scheibensegmenten mit einem Winkel angeordnet, der von der Idee her den Flankenwinkel von Schneckenwellen entspricht. Es wird davon ausgegangen, dass die Förderlogik den von Schneckenmaschinen ähnlich ist, wenn auch schnell deutlich wird, dass es grosse Abweichungen gibt. So ist die Möglichkeit, höhere Füllgrade bei schnelleren Drehzahlen zu erreichen, gegenüber Schneckenapparaten erheblich verbessert. Der Füllgrad lässt sich von der Rückseite über eine Austragsschnecke einstellen, ohne dass der Kneter in diesem Bereich sich zu 100 % füllt. Im Gegenteil ist der Füllgradverlauf recht homogen über die Länge und steigt eher linear an oder fällt ab, aber nie abrupt, es sei denn die rheologischen Eigenschaften des Produktes ändern sich ebenfalls abrupt.

Die fluchtende Anordnung der Barren ergibt sich somit aus der Analogie zur Schneckengeometrie, dass nämlich Wandreibung zum Transport notwendig ist. In der Publikation "Axialtransport in Kneader Reactors", Daniel U. Witte, Antec 2007, konnte gezeigt werden, dass Kneter bei viskosen Produkten nicht durch die Wandreibung fördern, sondern durch den Eingriff der Barren und Scheibensegmenten mit den statischen Einbauten oder den Barren und Scheibensegmenten der Gegenwelle. Dieses Modell bildet die Fördercharakteristik von Knetern in erster Näherung gut ab. Es ist ein praktisches Modell, das in seiner Einfachheit dem Modell der nominalen Fördermenge von Schneckenapparaten entspricht. Das Modell erklärt das Förderverhalten des Kneters so, dass bei einem lokalen Füllgrad einer Förderkammer bei der Begegnung der Knetelemente (auch Eingriff genannt) das Produkt in Leerräume im Behälterraum ausweicht. Diese Leerräume können in der stromaufwärts liegenden Förderkammer oder der stromabwärts liegenden sein. Es entsteht eine Art pulsierende Bewegung, die eine Tendenz hat, den Füllgrad über die Länge des Kneters auszugleichen. Die lokale Förderleistung in Wellenrichtung ist daher vom lokalen Füllgrad abhängig und muss lokal mit der Förderleistung der Nachbarkammern interpoliert werden, um die nominale Förderleistung des Kneters bestimmen zu können.

Aus dem Stand der Technik ist eine Anstellung der Barren gegenüber der Wellenachse hinreichend bekannt. Dies wird beispielsweise in der WO 2010/034446 A2, der CH 506 322 A, der DE 21 23 956 A1 gezeigt.

In der EP 1 714 694, die den Oberbegriff des Anspruch 1 offenbart, werden ebenfalls unterschiedlich zur Wellenachse angestellte Transportbarren gezeigt, wobei einzelne Transportbarren sogar geknickt ausgebildet sind, um das Zusammentreffen von zwei Produktströmen zu ermöglichen.

Aus der EP 0 274 668 A1 ist ein Knetmischer bekannt, bei dem die Transportbarren nicht nur in einem unterschiedlichen Winkel zur Transportwelle sondern auch unterschiedlich zueinander versetzt angeordnet sein können.

### Aufgabe

Aufgabe der vorliegenden Erfindung ist es, bisher bekannte Kneter bezüglich der Produktbehandlung und der Förderleistung zu verbessern und bezüglich des zu behandelnden Produkts flexibler auszugestalten.

### Lösung der Aufgabe

Zur Lösung der Aufgabe führen die Merkmale des kennzeichnenden Teils von Anspruch 1.

Eine wichtige Voraussage des Transportmodells der o.g. Publikation ist, dass die fluchtende Anordnung der Knet- oder Transportbarren für die Fördercharakteristik bei viskosen Massen und Pasten nicht zwingend ist. Geometrisch wird diese einzig durch den Anstellwinkel des Barren beeinflusst. Wenn dem so ist, kann der Anstellwinkel der Barren und der Anordnungswinkel der Barren zwischen aufeinander folgenden Scheibenreihen (der sogenannte Abwicklungswinkel) entkoppelt werden. Gegenstand sind daher vor allem Anordnungen, wo der Anstellwinkel und der Abwicklungswinkel nicht identisch sind. Dies hat den Vorteil, dass der Anstellwinkel entsprechend einer geforderten Fördercharakteristik des Kneters und der Abwicklungswinkel z.B. entsprechend einer gewünschten Eingriffskraftverteilung über die Drehbewegung der Welle bestimmt werden kann.

Es ist daran gedacht, den Winkel der Transportbarren mit der Wellenachse unterschiedlich zum Winkel zwischen den Mittelpunkten der Barren, die sich entlang der Wellenachse folgen, auszugestalten. Der Anstellwinkel, den die einzelnen Transportbarren mit der Wellenachse bilden, kann zumindest teilweise unterschiedlich ist.

Bei einwelligen Knetern lässt sich der Abwicklungswinkel und der Anstellwinkel beliebig entkoppeln. Ein konstruktives Erschwernis ergibt sich nicht. Bei mehrwelligen Knetern muss beachtet werden, dass die eingreifenden Elemente nicht tangential in der Wellenbewegung eingreifen, sondern in die Wellenbewegung der Gegenwelle eintauchen und nach einem bestimmten Drehwinkel wieder austreten. Eine Verdrehung der Barren gegenüber der Abwicklung der Welle ist daher nicht möglich, wenn der Kneter mit minimalen Spielen zwischen den drehenden Elementen gebaut wurde. Erfindungsgemäss wird dieses Problem so gelöst, dass der Barren in mindestens zwei Abschnitte aufgeteilt wird, die jeweils den gewünschten Barrenanstellwinkel aufweisen, wobei der Abwicklungswinkel beliebig gewählt werden kann. Die beiden Barrenhälften einer Mischkammer, die auf einander folgenden Scheiben montiert sind, bilden dabei eine Linie, so dass das Spiel zwischen den Wellenelementen wieder minimal ist.

### Figurenbeschreibung

Weitere Vorteile, Merkmale und Einzelheiten ergeben sich aus der nachfolgenden Beschreibung bevorzugter Ausführungsbeispiele sowie anhand der Zeichnung; diese zeigt in
Figur 1 einen schematisch dargestellten Querschnitt durch einen Kneter;
Figur 2 eine teilweise dargestellte Abwicklung von Transportbarren;
Figur 3 eine teilweise dargestellte Abwicklung einer anderen Anordnung von Transportbarren für einen Kneter gemäss Figur 1;
Figur 4 eine teilweise dargestellte Abwicklung eines Ausführungsbeispiels gemäss der Erfindung von Transportbarren für einen Kneter gemäss Figur 1.

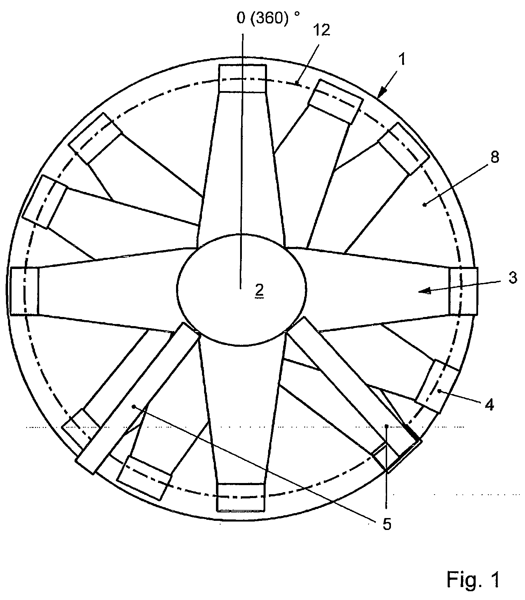

Gemäss Figur 1 dreht in einem Gehäuse 1 eine Welle 2, auf welcher Scheibenelemente 3 angeordnet sind. Diesen Scheibenelementen 3 sind Transportbarren 4 aufgesetzt, welche eine Gehäuseinnenwand abstreifen.

Die Transportbarren 4 und Scheibenelemente 3 wirken mit statischen Einbauten 5 zusammen, die von der Gehäuseinnenwand in einen Produktraum 8 gegen die Welle 2 einragen.

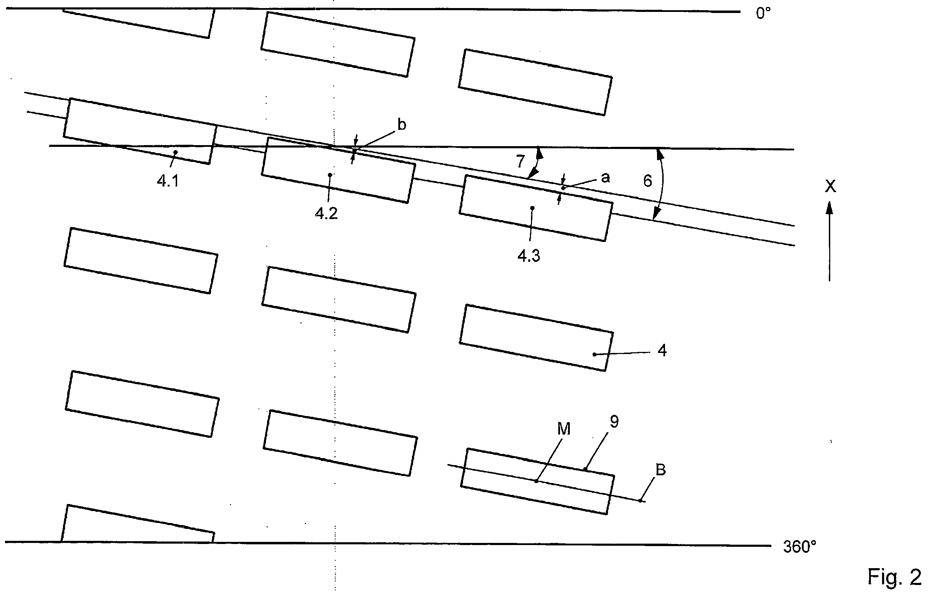

Strichpunktiert ist mit 12 eine Schnittebene mit Ansichtsrichtung für die nachfolgenden Figuren 2 bis 4 angedeutet.

Die Welle 2 dreht um eine Wellenachse A. Jeder Transportbarren 4 besitzt eine Mittelachse B, die durch einen Mittelpunkt M des Transportbarrens 4 verläuft. Die Mittelachse B ist in einem Winkel gegen die Wellenachse A angestellt.

Eine Oberfläche 9 des Knetbarrens 4 verläuft in einem Winkel 7, der als Förderwinkel zu bezeichnen ist. Im Beispiel gemäss Figur 2 verläuft die Oberfläche 9 in etwa parallel zu der Mittelachse B. Allerdings sind die Oberflächen 9 von aufeinander folgenden Transportbarren 4 jeweils um ein bestimmtes Mass a bzw. b in Umfangsrichtung versetzt angeordnet, so dass sie zu unterschiedlichen Zeiten im Produkt wirksam werden. Dabei ist hervorzuheben, dass der Produktraum 8 in einem Kneter nur zu einem bestimmten Teil gefüllt ist, während der übrige Teil produktfrei als Freiraum ausgestaltet ist. Dreht z.B. die Welle 2 in Richtung des Pfeiles x, so taucht der Transportbarren 4.1 zuerst aus dem Produkt auf, trifft dann aber nach einer gewissen Drehung als erster wieder auf das Produkt im Produktraum 8 auf. Zeitverzögert folgt ihm der Transportbarren 4.2 und diesem wiederum zeitverzögert der Transportbarren 4.3. Hierdurch wird sowohl die Produktbehandlung, als auch die Fördergeschwindigkeit, als auch die Kraftaufnahme der Welle beeinflusst.

Mit 6 wird im übrigen ein Abwicklungswinkel bezeichnet. Dies ist der Anordnungswinkel der Barren zwischen aufeinanderfolgenden Scheibenreihen. Im Ausführungsbeispiel gemäss Figur 2 entspricht der Abwicklungwinkel 6 dem Förderwinkel 7.

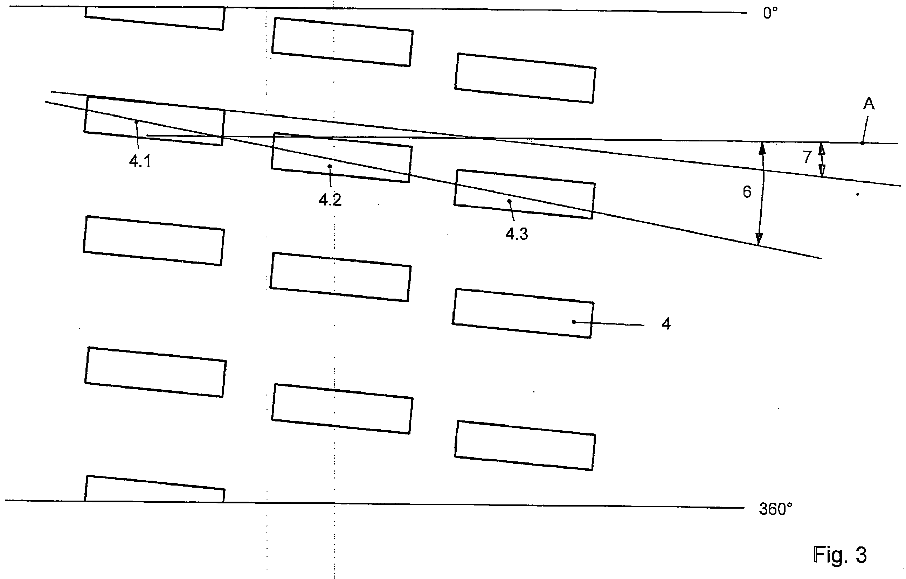

Anders ist dies dagegen in Figur 3, wo der Abwicklungswinkel 6 grösser ist als der Förderwinkel 7. In diesem Ausführungsbeispiel sind die Versätze der einzelnen Transportbarren 4.1, 4.2 und 4.3 wesentlich grösser.

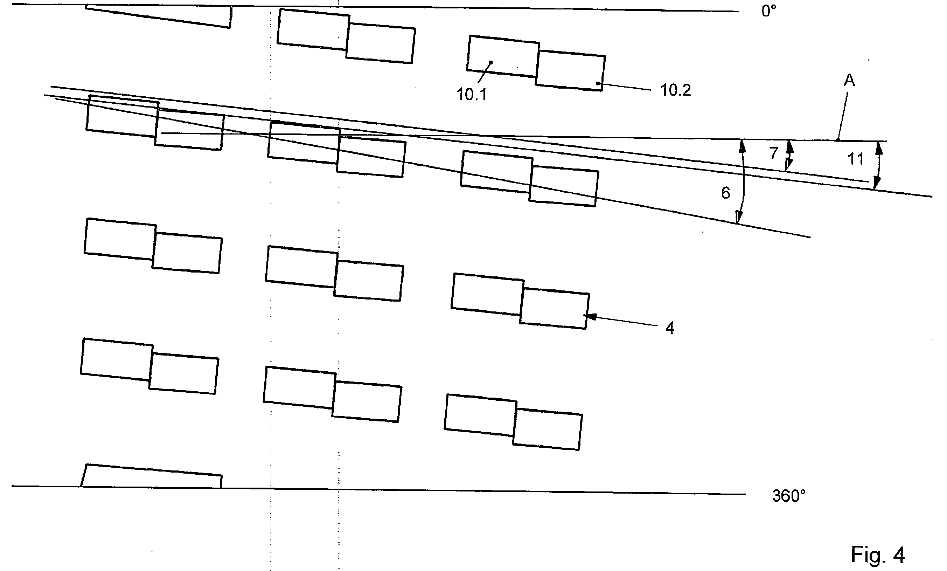

In dem Ausführungsbeispiel der Erfindung gemäss Figur 4 ist jeder Transportbarren in Abschnitte 10.1 und 10.2 unterteilt, die stufenförmig versetzt zueinander angeordnet sind. Dabei weisen die Mittelachsen der einander zugewandten Abschnitten von aufeinander folgenden Transportbarren, den gleichen Winkel zur Wellenachse auf. Auch hier ist der Abwicklungswinkel 6 und der Förderwinkel 7 angedeutet, ferner noch ein Winkel 11 von zwei einander zugewandten Abschnitten von aufeinanderfolgenden Transportbarren.

**Bezugszeichenliste**

| | | | | | |
|---|---|---|---|---|---|
| 1 | Gehäuse | 34 | | 67 | |
| 2 | Welle | 35 | | 68 | |
| 3 | Scheibenelement | 36 | | 69 | |
| 4 | Transportbarren | 37 | | 70 | |
| 5 | statische Einbauten | 38 | | 71 | |
| 6 | Abwicklungswinkel | 39 | | 72 | |
| 7 | Förderwinkel | 40 | | 73 | |
| 8 | Produktraum | 41 | | 74 | |
| 9 | Oberfläche | 42 | | 75 | |
| 10 | Abschnitte | 43 | | 76 | |
| 11 | Winkel | 44 | | 77 | |
| 12 | Schnittebene | 45 | | 78 | |
| 13 | | 46 | | 79 | |
| 14 | | 47 | | | |
| 15 | | 48 | | | |
| 16 | | 49 | | A | Wellenachse |
| 17 | | 50 | | B | Mittelachse |
| 18 | | 51 | | | |
| 19 | | 52 | | M | Mittelpunkt |
| 20 | | 53 | | | |
| 21 | | 54 | | | |
| 22 | | 55 | | x | Drehrichtung |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Mischkneter zum kontrollierten Transport von viskosen Massen und Pasten in zumindest einem Verfahrensraum (8) mittels zumindest einer Welle (2), auf der Scheibenelemente (3) mit aufgesetzten Transportbarren (4) angeordnet sind und die um eine Wellenachse (A) dreht, wobei Mittelachsen (B) der Transportbarren (4) in einem Winkel (7) zur Wellenachse (A) verlaufen,
**dadurch gekennzeichnet,**
**dass** die Transportbarren (4) in zwei oder mehrere treppenstufenförmig angeordnete Abschnitte (10.1, 10.2) unterteilt sind und die Mittelachsen (B) von in Richtung der Wellenachse (A) aufeinanderfolgenden Transportbarren (4) in Umfangsrichtung versetzt zueinander verlaufen.

2. Mischkneter nach Anspruch 1, **dadurch gekennzeichnet, dass** die Mittelachsen der Abschnitte (10.1, 10.2) von aufeinander folgenden Transportbarren (4) in gleichem Winkel zur Wellenachse (A) verlaufen.

## Claims

1. A mixing kneader for the controlled transportation of viscous substances and pastes in at least one processing chamber (8) by means of at least one shaft (8) on which there are arranged disc elements (3) with attached transport bars (4) and which rotates about a shaft axis (A), wherein central axes (B) of the transport bars (4) run at an angle (7) to the shaft axis (A),
**characterized in that**
the transport bars (4) are divided into two or more portions (10.1, 10.2) arranged in a step-shaped manner and the central axes (B) of transport bars (4) successive in the direction of the shaft axis (A) run staggered in relation to one another in the circumferential direction.

2. A mixing kneader according to claim 1, **characterized in that** the central axes of the portions (10.1, 10.2) of successive transport bars (4) run at the same angle to the shaft axis (A).

## Revendications

1. Mélangeur-pétrisseur pour le transport contrôlé de matières et pâtes visqueuses dans au moins une chambre de procédé (8) par au moins un arbre (2), sur lequel sont disposés des éléments en forme de disque (3) avec des barres de transport y placées (4), et qui tourne autour d'un axe d'arbre (A), les axes centraux (B) des barres de transport (4) s'étendant suivant un angle (7) par rapport à l'axe d'arbre (A),
**caractérisé par le fait**
**que** les barres de transport (4) sont divisées en deux ou plusieurs segments (10.1, 10.2) disposés en forme d'échelons et que les axes centraux (B) de barres de transport (4) successives dans la direction de l'axe d'arbre (A) s'étendent décalés entre eux dans le sens circonférentiel.

2. Mélangeur-pétrisseur selon la revendication 1, **caractérisé en ce que** les axes centraux des segments (10.1, 10.2) de barres de transport (4) successives s'étendent selon un même angle par rapport à l'axe d'arbre (A).
